# EUROPEAN PATENT APPLICATION

(11) **EP 4 836 046 A1**
(43) Date of publication of application: **04.11.2026**
(21) Application number: 25809866.4
(22) Date of filing: 30.04.2025
(51) Int. Cl.: H01M 10/04, B65H 45/101, B65H 23/26

(54) **ELECTRODE STACKING DEVICE**

(30) Priority: 10.05.2024 KR 20240061913
(71) Applicant: LG Energy Solution, Ltd., Seoul 07335 (KR)
(72) Inventor: CHOI, Jongkwan, Daejeon 34122 (KR); KIM, Nam Young, Daejeon 34122 (KR); LEE, Ju Young, Daejeon 34122 (KR)
(74) Representative: Goddar, Heinz J.
(86) International application number: PCT/KR2025/005901
(87) International publication number: WO 2025/234686

(57) **Abstract**

The present invention provides a structure of an electrode stacking apparatus having a tension compensator that applies compensatory tension to the center of the separator to prevent the widthwise center and two widthwise ends of the separator from being subjected to non-uniform tensile deformation in a zigzag stacking process.

## Description

### [TECHNICAL FIELD]

This application claims the benefit of priority with respect to Korean Patent Application No. 10-2024-0061913 filed on May 10, 2024, entire content disclosed in the document of the patent applications is included as a part of this specification.

The present invention relates to a structure of an electrode stacking apparatus used in a zigzag stacking method for manufacturing an electrode assembly embedded in a secondary battery cell.

### [BACKGROUND ART]

Secondary batteries, which provides ease of application depending on the product group and have electrical characteristics such as high energy density, are widely applied not only to portable devices, but also to electric vehicles or hybrid vehicles driven by an electrical driving source, and power storage devices. These secondary batteries are attracting attention as a new energy source for improving eco-friendliness and energy efficiency, not only because they have the primary advantage of being able to dramatically reduce the use of fossil fuels, but also because they do not generate any by-products due to energy use.

While small mobile devices use one or two or three battery cells per device, medium to large devices such as vehicles require high output and large capacity. Therefore, a medium to large-sized battery module or battery pack in which multiple battery cells are electrically connected is used.

Meanwhile, as a type of unit secondary battery cell, cylindrical, prismatic and pouch-type battery cells are known. Since it is desirable to manufacture medium-to-large-sized battery modules as small and light as possible, prismatic batteries and pouch-type batteries that may be stacked with a high degree of integration and have a small weight per capacity are mainly used as battery cells for medium-to-large-sized battery modules.

Among these, pouch-type battery cells have various structures depending on the method of manufacturing the electrode assembly accommodated therein. In particular, recently, high-capacity electrode assemblies of stack cell type are often manufactured at a high speed using the zigzag stacking method, which alternately stacks anodes and cathodes between each layer of a separator folded in a zigzag pattern.

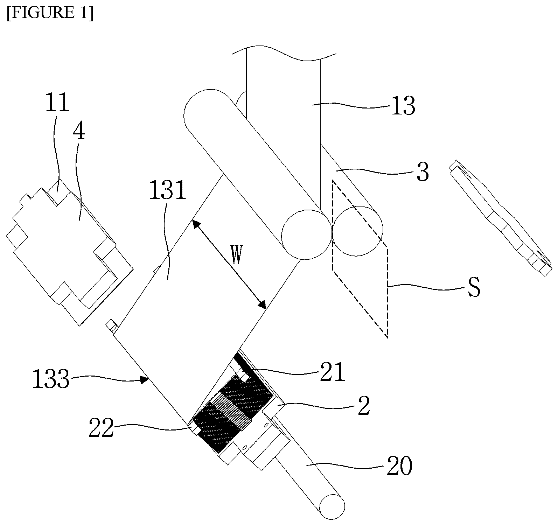

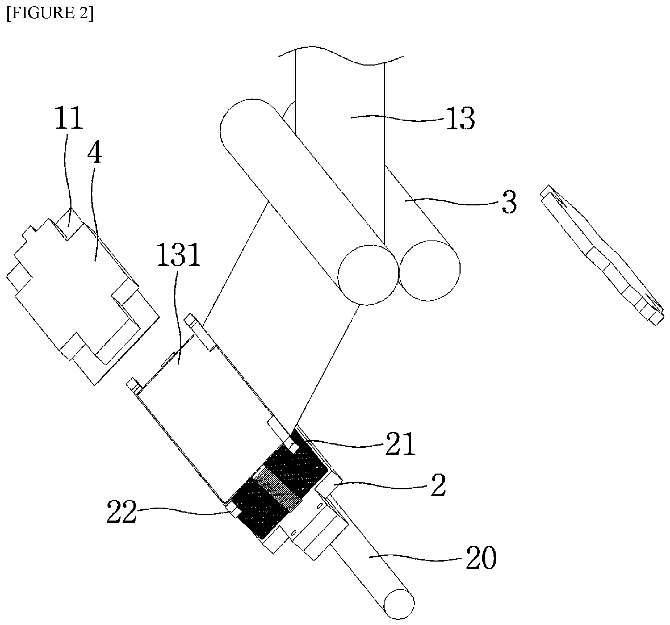

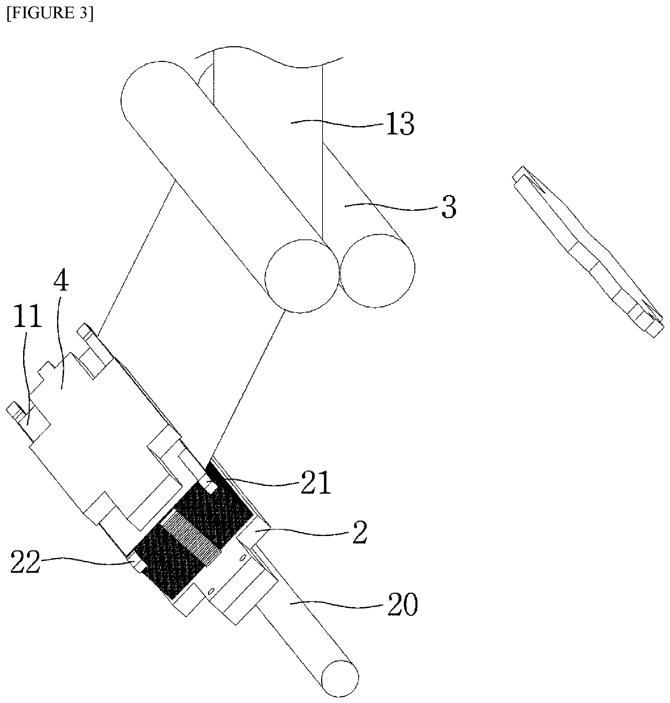

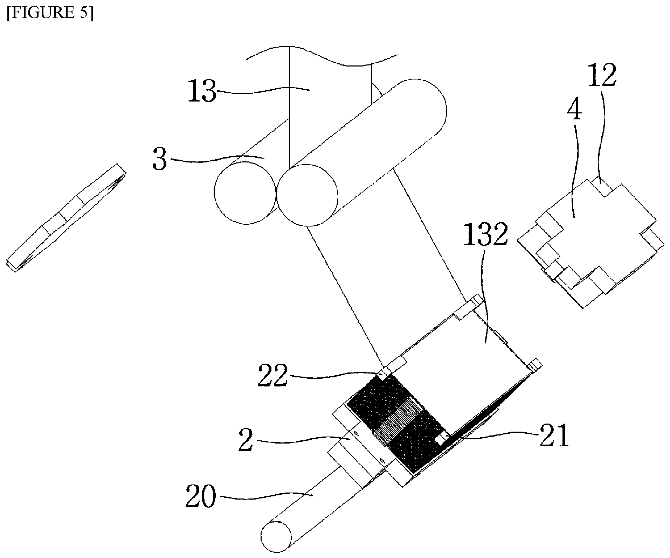

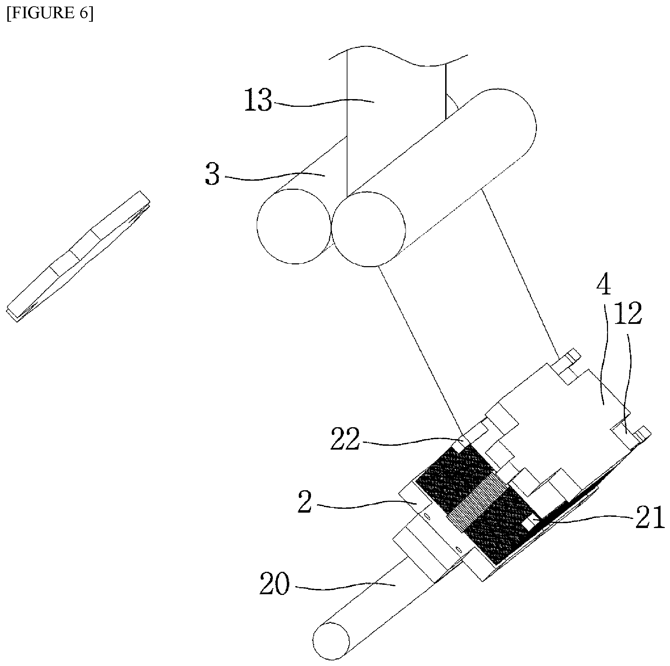

FIGS. 1 to 6 illustrate a stacking process of a separator and an electrode through zigzag stacking. Referring to FIGS. 1 to 6, zigzag stacking is performed by alternately stacking a first electrode 11 and a second electrode 12 having different polarities through a zigzag-folded separator 13. Here, the separator 13 is continuously supplied from a nip roller 3 to a stack table 2 that reciprocates between a first relative position and a second relative position, and is folded around a first mandrel 21 and a second mandrel 22 that alternately grip the separator 13 while moving together with the stack table 2, thereby forming folded portions 133 and 134.

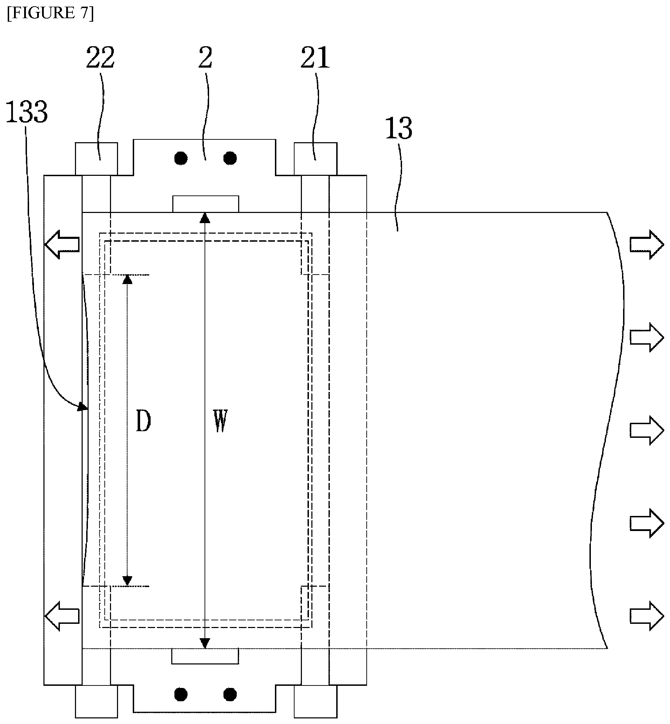

FIG. 7 illustrates a separator with tensile deformation. Referring to FIG. 7, the first mandrel 21 and the second mandrel 22 are provided as a pair spaced apart by a predetermined distance D from each other along the widthwise direction of the separator 13. Accordingly, when the stack table 2 is displaced from the first relative position to the second relative position, tension is applied between the part gripped by the second mandrel 22 and the nip roller 3. Here, in the separator 13, the part gripped by the second mandrel 22 is mainly subjected to tensile deformation, and the part located between the pair of second mandrels 22 is hardly deformed, except that the part close to the second mandrel 22 is slightly deformed due to the friction force with the second mandrel 22.

The non-uniform tensile deformation of the separator 13 causes bulge or oversize in the completed electrode assembly and causes structural and functional defects. Therefore, a technical means to resolve this is urgently necessary.

### [DISCLOSURE]

### [TECHNICAL PROBLEM]

In order to solve above-described problems of the prior art, it is an object of the present invention to provide a structure of an electrode stacking apparatus that prevents non-uniform tensile deformation of the separator in an electrode stacking apparatus that manufactures an electrode assembly through zigzag stacking.

Specifically, it is an object of the present invention to prevent non-uniform tensile deformation caused by tension applied non-uniformly to the separator by a mandrel that holds the separator for folding.

It is also an object of the present invention to provide a structure of an electrode stacking apparatus capable of manufacturing an electrode assembly without defects such as bulging or oversize due to deformation of a separator.

The technical problems to be solved by the present invention are not limited to the objects described above, and other objects and advantages of the present invention that are not described may be understood through the following description and will be more clearly understood by the examples of the present invention. Additionally, it is apparent that the objects and advantages of the present invention may be embodied by the means and combinations thereof indicated in the claims.

### [TECHNICAL SOLUTION]

In order to solve above-described problems, the present invention provides a structure an electrode stacking apparatus including: a stack table provided with a first electrode and a second electrode alternately stacked with a separator having a predetermined width, wherein the separator may be continuously provided in front-rear direction and folded in a zigzag manner such that first and second surfaces thereof may be alternately exposed; a pair of nip rollers arranged symmetrically on left and right sides of a predetermined plane of symmetry, respectively, wherein the pair of nip rollers may be vertically spaced apart from the stack table to regulate a supply position of the separator supplied to the stack table; a driving unit displacing a position of the stack table relative to the pair of nip roller between a first relative position on the left side and a second relative position on the right side of the plane of symmetry; a pair of first mandrels spaced apart from each other along the front-rear direction with a predetermined distance therebetween and defining a right folded portion of the separator, wherein the pair of first mandrels presses the first surface of the separator against the stack table at least when the stack table may be displaced from the first relative position to the second relative position; a pair of second mandrels spaced apart from each other along the front-rear direction with the predetermined distance therebetween and defining a left folded portion of the separator, wherein the pair of second mandrels presses the second surface of the separator against the stack table at least when the stack table may be displaced from the second relative position to the first relative position; and a tension compensator pressing a surface of the separator at least temporarily.

The tension compensator according to the present invention is configured to apply compensatory tension to the widthwise center of the separator in order to prevent the widthwise center and the two widthwise ends from being subjected to non-uniform tensile deformation as the separator is gripped at the widthwise ends thereof by the first mandrel and the second mandrel.

According to an embodiment, the tension compensator may include a first tension compensator and a second tension compensator arranged symmetrically with respect to the plane of symmetry. The first tension compensator and the second tension compensator may have fixed relative positions with respect to the nip roller.

The first tension compensator may be disposed on the left side with respect to the plane of symmetry to press the separator at least in a portion of a section where the stack table is displaced from the second relative position to the first relative position. Here, the surface pressed by the first tension compensator may be the first surface of the separator.

The second tension compensator may be disposed on the right side with respect to the plane of symmetry to press the second surface of the separator at least in a portion of a section where the stack table is displaced from the first relative position to the second relative position. Here, the surface pressed by the first tension compensator may be the second surface of the separator.

Here, the separator may have the extending direction thereof bent with respect to the nip roller, the first tension compensator and the second mandrel as a starting point at least immediately after the stack table is displaced to the first relative position, and the extending direction thereof bent with respect to the nip roller, the second tension compensator and the first mandrel as a starting point at least immediately after the stack table is displaced to the second relative position.

According to a modified example, the tension compensator may be displaced in association with the stack table. That is, the tension compensator may have a fixed relative position with respect to the stack table.

In such case, the tension compensator may press the second surface of the separator at least in a portion of a section where the stack table is displaced from the first relative position to the second relative position, and press the first surface of the separator at least in a portion of a section where the stack table is displaced from the second relative position to the first relative position.

Here, the tension compensator may be retracted so as not to interfere with the separator before the first electrode or the second electrode is stacked after the stack table is displaced to the first relative position or the second relative position, and then may be positioned so as to interfere with the separator before the stack table is displaced to the second relative position or the first relative position after the first electrode or the second electrode is stacked.

Specifically, according to an aspect of the present invention, the tension compensator may have an elongated shape having a predetermined length in the front-rear direction, the center of which with respect to the front-rear direction protruding further toward the separator than front and rear ends thereof. That is, the center of the tension compensator with respect to the front-rear direction may come into contact with the separator first before coming into contact with the front and rear ends thereof when the separator approaches to come in contact with the tension compensator Accordingly, the tension compensator may apply a greater tension to the widthwise center than the two widthwise ends of the separator, and compensate for the non-uniform tension applied to the separator by the first mandrel and the second mandrel.

According to an embodiment of the present invention, the tension compensator may include a roll shape having a concentric circular cross-section along the front-rear direction. It is preferable that the tension compensator is installed to be rotatable along the progress of the separator. Here, the diameter of the tension compensator may be larger at the center thereof with respect to the front-rear direction than at the front and rear ends thereof. In such case, the tension compensator may not cause unnecessary friction with the separator, and thus may not cause excessive deformation or damage to the separator. However, it is sufficient as long as the tension compensator extends along the front-rear direction and the center thereof with respect to the front-rear direction protrudes toward the separator compared to the front and rear ends thereof, and it is not necessary that the tension compensator is installed rotatably or have a roll shape.

According to an embodiment of the present invention, the diameter of the tension compensator may increase from the front and rear ends thereof toward the center thereof with respect to the front-rear direction. Since the separator is subjected to tensile deformation increasing from the widthwise center thereof toward the widthwise ends thereof due to the tension and friction force provided by the first mandrel or the second mandrel, the tension compensator may compensate for such deformation by having a shape corresponding thereto.

In addition, it is preferable that an increase rate of the diameter of the tension compensator decreases from the front and rear ends thereof toward the center thereof with respect to the front-rear direction. Accordingly, the actual tensile deformation applied to the separator may be accurately compensated, and the contact area between the tension compensator and the separator forms a smooth curve without a peak such that damage to the separator may be prevented.

According to another embodiment, the tension compensator may include a tapered portion having a diameter increasing toward the center thereof with respect to the front-rear direction in some sections irrelevant of whether the diameter increases or decreases along the entire section along the front-rear direction.

In addition, the predetermined length may be equal to or less than the predetermined width. That is, the tension compensator may be in contact with only a portion of, rather than the entirety of, the center of the separator in the widthwise direction.

In particular, the predetermined length may be equal to or less than the predetermined distance. In such case, the tension compensator may not apply tension to a portion to which tension by the first mandrel or the second mandrel is applied.

According to another aspect of the present invention, the tension compensator may have an elongated shape having a predetermined first length equal to or less than the predetermined width in the front-rear direction. That is, the tension compensator may be in contact with only a portion of, rather than the entirety of, the center of the separator in the widthwise direction. Accordingly, the tension compensator may apply a greater tension to the widthwise center than to the two widthwise ends of the separator, and may compensate for the non-uniform tension applied to the separator by the first mandrel and the second mandrel.

According to another embodiment of the present invention, the tension compensator may include a roll shape having a concentric circular cross-section along the front-rear direction. It is preferable that the tension compensator is installed to be rotatable along the progress of the separator. Here, the diameter of the tension compensator may be larger at the center thereof with respect to the front-rear direction than at the front and rear ends thereof. In such case, the tension compensator may not cause unnecessary friction with the separator, and thus may not cause excessive deformation or damage to the separator. However, it is sufficient as long as the first length is less than the width of the separator, and it is not necessary that the tension compensator is installed rotatably or have a roll shape.

The tension compensator according to another embodiment of the present invention may include: a pair of tapered portions having a diameter increasing toward the center thereof with respect to the front-rear direction; and a flat portion extending by a predetermined second length and connecting the pair of tapered portions with a constant diameter. Accordingly, the pressure applied by the tension compensator to the separator is prevented from being concentrated at the end of the tension compensator, thereby preventing the separator from being excessively deformed or damaged.

Here, it is preferable that the second length is equal to or less than the predetermined distance. In such case, the flat portion applies tension to a portion of the separator where the first mandrel and the second mandrel do not apply tension, and the tapered portion may prevent overlapping of the degree of deformation at the boundary between the portion where the tension compensator applies tension and the portion where the first mandrel and the second mandrel apply tension. In addition, since tensile deformation may occur in a portion located inner than the portion of the separator in contact with the first mandrel in the widthwise direction due to the friction force between the first mandrel and the second mandrel, it is preferable that the second length be set to be sufficiently less than the predetermined distance.

According to another embodiment of the present invention, the first length may be larger than the predetermined distance and less than the predetermined width.

According to another embodiment, the first length may be equal to or less than the predetermined distance. In such case, the tension compensator may not apply tension to a portion to which tension is applied by the first mandrel or the second mandrel.

The present invention also provides a structure of an electrode stacking apparatus including: a stack table provided with a first electrode and a second electrode alternately stacked with a separator having a predetermined width, wherein the separator may be continuously provided in front-rear direction and folded in a zigzag manner such that first and second surfaces thereof may be alternately exposed; a pair of nip rollers of an elongated shape having a predetermined length in the front-rear direction, wherein the pair of nip rollers may be arranged symmetrically on left and right sides of a predetermined plane of symmetry, respectively and may be vertically spaced apart from the stack table to regulate a supply position of the separator supplied to the stack table; a driving unit displacing a position of the stack table relative to the pair of nip roller between a first relative position on the left side and a second relative position on the right side of the plane of symmetry; a pair of first mandrels spaced apart from each other along the front-rear direction with a predetermined distance therebetween and defining a right folded portion of the separator, wherein the pair of first mandrels presses the first surface of the separator against the stack table at least when the stack table may be displaced from the first relative position to the second relative position; and a pair of second mandrels spaced apart from each other along the front-rear direction with the predetermined distance therebetween and defining a left folded portion of the separator, wherein the pair of second mandrels presses the second surface of the separator against the stack table at least when the stack table may be displaced from the second relative position to the first relative position, wherein each of the nip rollers has a diameter larger at a portion corresponding to the widthwise center of the separator than at a portion corresponding to two widthwise ends of the separator.

That is, the tension compensator according to the present invention may be included in the nip roller or may be the nip roller itself. That is, according to the present invention, the effect of preventing the widthwise center and the two widthwise ends of the separator from being subjected to non-uniform tensile deformation by applying compensatory tension to the widthwise center of the separator may be obtained not only when the tension compensator is provided as a separate part, but also when the shape or dimension of the nip roller is changed.

Here, the feature "the diameter of each nip roller is larger at a portion corresponding to the widthwise center of the separator than at a portion corresponding to the two widthwise ends of the separator" also includes a case where the predetermined length is less than the predetermined width such that the nip roller does not have a portion corresponding to the two widthwise ends of the separator or the diameter thereof is 0.

In such case, it will be apparent from the description herein that the shape of the tension compensator described above may be referred to when constituting the specific shape of the nip roller.

### [ADVANTAGEOUS EFFECTS]

The present invention may provide a structure of an electrode stacking apparatus in which a uniform tension may be applied along the width of a separator.

According to an embodiment of the present invention, provided is a structure of an electrode stacking apparatus provided with a tension compensator applying a compensatory tension to the non-uniform tension applied to the separator by a mandrel so as to obtain uniform tensile deformation of a separator.

Accordingly, the electrode stacking apparatus according to the present invention may manufacture an electrode assembly with minimized defects caused by oversize or swell due to the deformation of the separator.

In addition, the present invention may have various other effects, and the descriptions thereof will be given in each embodiment, or the description of the effects that may be easily inferred by a person skilled in the art will be omitted.

### [BRIEF DESCRIPTION OF DRAWINGS]

FIGS. 1 to 6 illustrate a stacking process of a separator and an electrode through zigzag stacking.
FIG. 7 illustrates a separator with tensile deformation.
FIG. 8 illustrates an electrode stacking apparatus according to an embodiment of the present invention.
FIG. 9 illustrates a stacking process of an electrode according to an embodiment of the present invention.
FIG. 10 illustrates a stacking process of an electrode according to a first modified example.
FIG. 11 illustrates a stacking process of an electrode according to a second modified example.
FIG. 12 illustrates a shape of a tension compensator according to an embodiment of the present invention.
FIG. 13 illustrates a shape of a tension compensator according to another embodiment of the present invention.

### [DESCRIPTION OF REFERENCE NUMERALS]

11: first electrode
12: second electrode
13: separator
131: first surface
132: second surface
133: left folded portion
134: right folded portion
2: stack table
20: driving unit
21: first mandrel
22: second mandrel
3: nip roller
4: transport means
51: (first) tension compensator
510: tapered portion
511: flat portion
52: second tension compensator
S: plane of symmetry
W: width
D: distance
L: length
L1: first length
L2: second length
D1: first diameter
D2: second diameter

### [DETAILED DESCRIPTION OF THE PREFERRED EMBODIMENTS]

The above-described objects, features and advantages will be described in detail hereinafter with reference to the accompanying drawings such that those skilled in the art will be able to implement the technical idea of the present invention. In describing the present invention, when it is determined that a detailed description of prior art related to the present invention unnecessarily obscures the gist of the present invention, the detailed description thereof will be omitted. Hereinafter, preferred embodiments according to the present invention will be described in detail with reference to the accompanying drawings. In the drawings, identical reference numerals are used for indicating identical or similar components.

While "first", "second", etc. are used to describe various elements, these elements are of course not limited by these terms. These terms are only used to distinguish one element from another, and unless specifically stated otherwise, a first element may also be a second element.

Throughout the specification, unless stated otherwise, each element may be singular or plural.

Hereinafter, "arranging an element at upper portion (or lower portion) of an element" or "arranging an element at top (or bottom) of an element" refers to not only "arranging an element to be in contact with upper surface (or lower surface)" but also to "arranging an element above upper surface (or lower surface) with another element interposed therebetween."

Additionally, when an element is described as being "connected to," "coupled with," or "in contact with" another element, it should be understood that the element may be "directly connected to," "directly coupled with," or "directly in contact with" another element, or the element may be "connected to," "coupled with," or "in contact with" another element with yet another element interposed therebetween or via yet another element.

The expressions in singular form used herein include expressions in plural form unless the context explicitly dictates otherwise. Terms such as "consists of" or "comprises" used herein should not be construed as necessarily including all of the elements or steps described in the specification, and should be construed as not including some of the elements or steps, or including additional elements or steps.

Throughout the specification, "A and/or B" refers to A, B or A and B unless specifically stated otherwise, and "C to D" refers to from equal to or higher than C to equal to or lower D unless specifically stated otherwise.

While expressions related to directions such as vertical direction, left-right direction, and front-rear direction are used herein for convenience of description, these are not absolute directions related to the direction of gravity or any geographic orientation. For example, it is sufficient that vertical direction, left-right direction and front-rear direction used herein are understood to refer to any one of three directions that intersects with the other two.

Hereinafter, preferred embodiments of the present invention will be described with reference to the accompanying drawings.

### [GENERAL ZIGZAG STACKING PROCESS]

FIGS. 1 to 6 illustrate the stacking process of a separator and an electrode through zigzag stacking. Specifically, FIGS. 1 to 6 illustrate the electrode stacking apparatus in the first step to the sixth step repeatedly performed in the zigzag stacking process, respectively. Referring to FIGS. 1 to 6, the electrode stacking apparatus includes: a stack table 2; a driving unit 20; a first mandrel 21; a second mandrel 22; a nip roller 3; and a transport means 4.

On the stack table 2, a first electrode 11 and a second electrode 12 are alternately stacked with a separator 13 interposed therebetween.

The nip roller 3 and the stack table 2 are arranged vertically and spaced apart from each other.

As shown in FIG. 1, the nip roller 3 is a pair of rotatable roll-shaped members arranged symmetrically on the left and right sides of a virtual plane of symmetry S, and the separator 13 runs between the pair of nip rollers 3 and is continuously supplied from a predetermined supply position regulated by the nip roller 3. Here, the separator 13 has a sheet shape extending with a predetermined width W and is unwound and supplied from the separator roll.

The stack table 2 is driven by the driving unit 20 to reciprocate between a predetermined first relative position and a second relative position with respect to the plane of symmetry S. Specifically, the driving unit 20 rotates the stack table 2 about a center axis spaced apart from the stack table 2 vertically, and reciprocates between the first relative position and the second relative position spaced apart along the circumferential direction of the rotation at a predetermined cycle.

The first mandrel 21 and the second mandrel 22 are installed to reciprocate with the stack table 2 with respect to the center axis. The first mandrel 21 and the second mandrel 22 are arranged to be spaced apart from each other in the left-right direction with respect to the stack table 2. The first mandrel 21 and the second mandrel 22 are provided as a pair separated by a predetermined distance in the front-rear direction.

The first mandrel 21 presses the first surface 131 of the separator 13 against the stack table 2 at least when the stack table 2 is displaced from the first relative position to the second relative position, and defines the right folded portion 134 of the separator 13.

Specifically, referring to FIGS. 1 to 4, the first mandrel 21 releases the pressure against the separator 13 in the first step, and presses the first surface 131 of the separator 13 against the stack table 2 again in the second step. In the third step, the transport means 4 transports and stacks the first electrode 11 on the first surface 131 of the separator 13. In the fourth step, the stack table 2 is displaced to the second relative position such that the separator 13 is folded around the first mandrel 21 to form the right folded portion 134.

Similarly, the second mandrel 22 presses the second surface 132 of the separator 13 against the stack table 2 and defines the left folded portion 133 of the separator 13 at least when the stack table 2 is displaced from the second relative position to the first relative position.

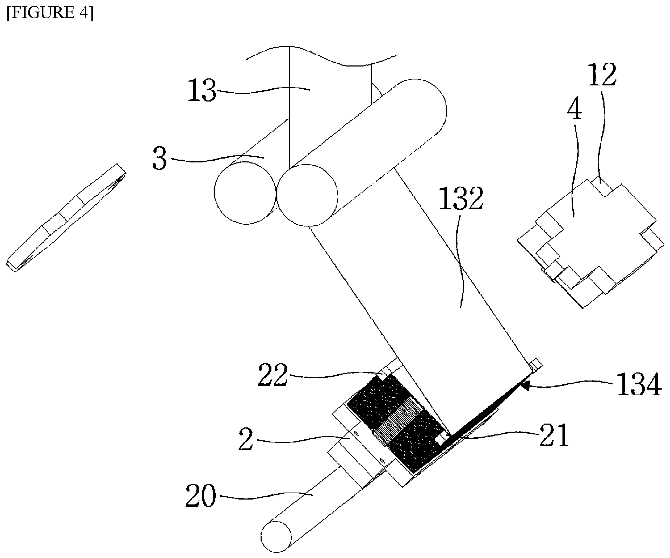

Specifically, referring to FIGS. 4 to 6 and 1, the second mandrel 22 releases the pressure on the separator 13 in the fourth step, and presses the first surface 131 of the separator 13 against the stack table 2 in the fifth step. In the sixth step, the transport means 4 transports and stacks the second electrode 12 on the second surface 132 of the separator 13. In the first step, the stack table 2 is displaced to the first relative position such that the separator 13 is folded around the second mandrel 22 to form the left folded portion 133.

As the first step to the sixth step are repeated several times, an electrode assembly having a structure in which the first electrode 11 and the second electrode 12 are alternately laminated through each layer of the separator 13 folded in a zigzag pattern is manufactured.

Here, a predetermined tension is continuously applied to the separator 13 for an accurate supply speed and smooth run of the separator 13.

FIG. 7 illustrates a separator with tensile deformation. Referring to FIG. 7, in the first step, as the separator 13 is folded with the pressure applied thereto by the second mandrel 22, the second mandrel 22 provides a counterforce to the tension applied to the separator 13. Here, a certain section of the two widthwise ends of the separator 13 in contact with the second mandrel 22 receives a greater tension than the widthwise center thereof such that a non-uniform tensile deformation occurs in the separator 13. As a result, the right folded portion 134 undergoes a deformation in which the widthwise center thereof sags inward, and a portion adjacent to the inner end of the second mandrel 22 is somewhat subjected to tensile deformation in the widthwise direction of the separator 13 due to the friction force applied by the second mandrel 22.

This phenomenon may occur in the same way not only with the second mandrel 22 but also with the first mandrel 21. That is, in the fourth step, since the first mandrel 21 presses the separator 13 and provides a counterforce to the tension, non-uniform tensile deformation may occur in the left folded portion 133.

The features of the present invention described below are to solve such problem. However, the present invention is not necessarily applicable only to performing the above-described process with the electrode assembly apparatus having the above-described structure.

### [ARRANGEMENT OF TENSION COMPENSATOR]

An electrode stacking apparatus according to an embodiment of the present invention includes the structure of the electrode stacking apparatus described with reference to FIGS. 1 to 6, and is used to manufacture an electrode assembly by repeatedly performing first to sixth steps similar to the first to sixth steps, respectively. The electrode assembly apparatus according to the embodiment of the present invention is characterized in that a tension compensator described below is additionally included. However, it should be understood that the present invention also encompasses a case where the tension compensator described below is applied to another type of electrode stacking apparatus for zigzag stacking.

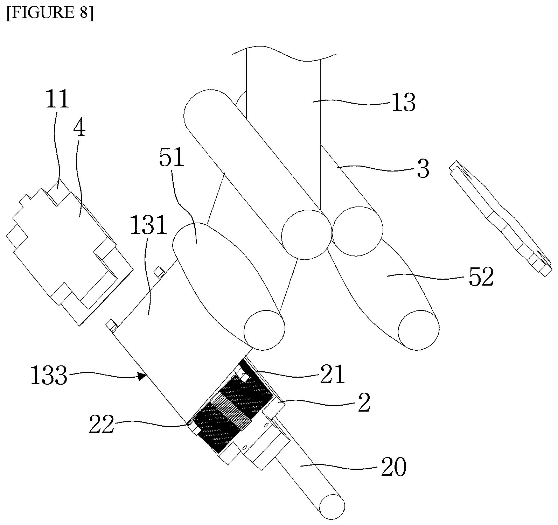

Hereinafter, with reference to FIGS. 8 to 11, the structure of the electrode stacking apparatus according to the present invention and the arrangement and operation of the tension compensator are described.

FIG. 8 illustrates an electrode stacking apparatus according to an embodiment of the present invention. Referring to FIG. 8, the electrode stacking apparatus according to the present invention includes a tension compensator 51 at least temporarily pressing a surface of the separator 13.

The tension compensator 51 according to the present invention applies compensatory tension to the widthwise center of the separator 13 in order to prevent the widthwise center and the two widthwise ends from being subjected to non-uniform tensile deformation as the separator 13 is gripped at the widthwise ends thereof by the first mandrel 21 and the second mandrel 22.

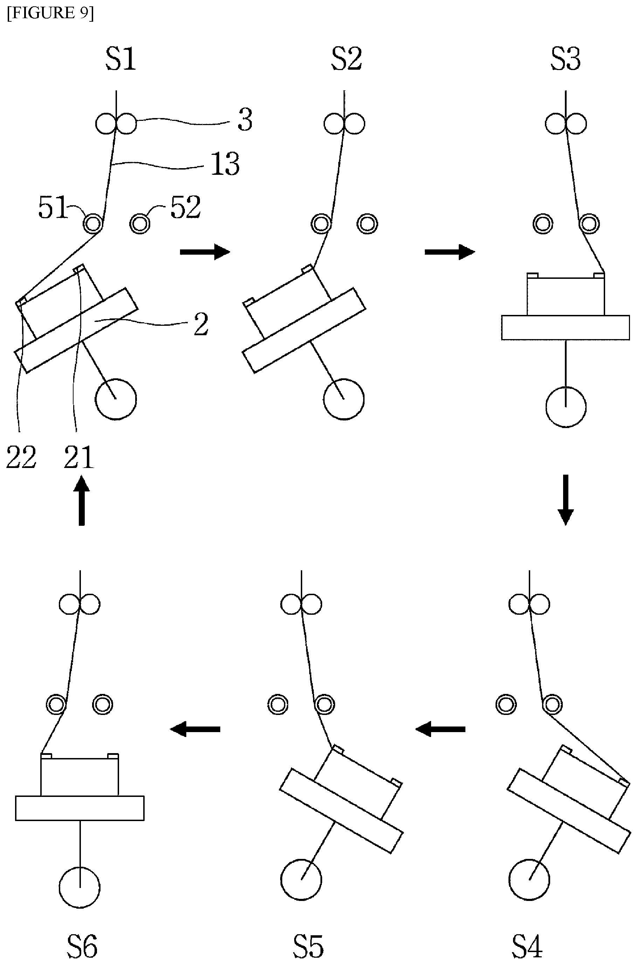

FIG. 9 illustrates a stacking process of an electrode according to an embodiment of the present invention. Referring to FIG. 9, the tension compensator 51 according to an embodiment of the present invention may include a first tension compensator 51 and a second tension compensator 52 arranged symmetrically with respect to the plane of symmetry S. The first tension compensator 51 and the second tension compensator 52 may have a fixed relative position with respect to the nip roller 3.

The first tension compensator 51 is positioned on the left side with respect to the plane of symmetry S to press the separator 13 at least in a portion of a section where the stack table 2 is displaced from the second relative position to the first relative position. Specifically, the first tension compensator 51 may press the separator 13 over the sixth step S6, the first step S1 and the second step S2. However, the first tension compensator 51 may be arranged so as to press the separator 13 only in the first step S1. In such case, the surface that the first tension compensator 51 presses may be the first surface 131 of the separator 13.

The second tension compensator 52 is positioned on the right side with respect to the plane of symmetry S to press the separator 13 at least in a portion of a section where the stack table 2 is displaced from the first relative position to the second relative position. Specifically, the second tension compensator 52 may press the separator 13 over the third step S3 to the fifth step S5. However, the second tension compensator 52 may be arranged so as to press the separator 13 only in the fourth step S4. In such case, the surface that the second tension compensator 52 presses may be the second surface 132 of the separator 13.

Here, the separator 13 may have the extending direction thereof bent with respect to the nip roller 3, the first tension compensator 51 and the second mandrel 22 at least in the first step S1, and may have the extending direction thereof bent with respect to the nip roller 3, the second tension compensator 52 and the first mandrel 21 at least in the fourth step S4.

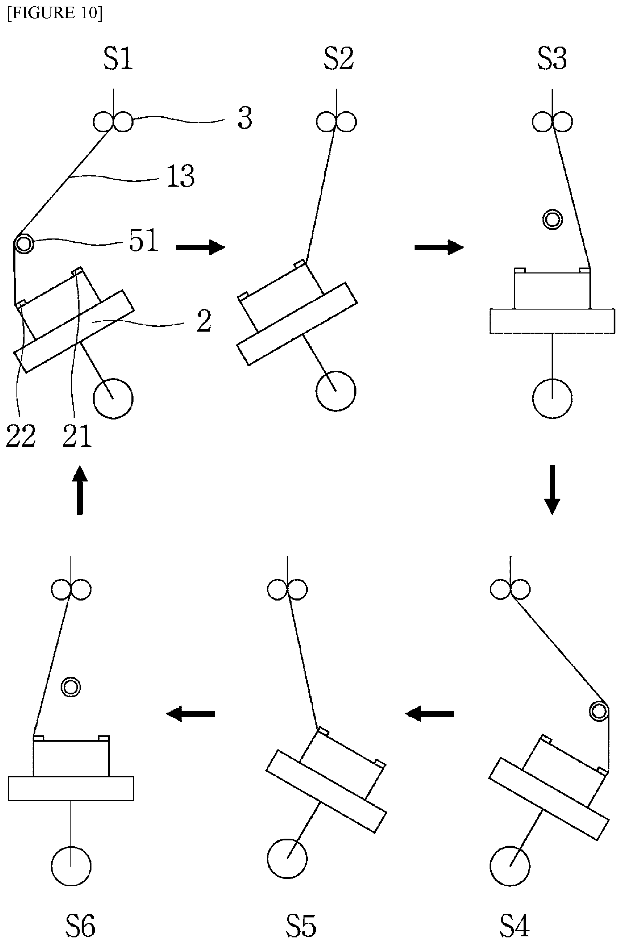

FIG. 10 illustrates a stacking process of an electrode according to a first modified example. Referring to FIG. 10, the tension compensator 51 according to the first modified example may be displaced in association with the stack table 2. That is, the tension compensator 51 may have a fixed relative position with respect to the stack table 2.

In such case, the tension compensator 51 may press the second surface 132 of the separator 13 at least in some section where the stack table 2 is displaced from the second relative position to the first relative position, and may press the first surface 131 of the separator 13 at least in some section where the stack table 2 is displaced from the first relative position to the second relative position. Specifically, the tension compensator 51 may press the separator 13 in each of the first step S1 and the fourth step S4.

Here, the tension compensator 51 may be retracted so as not to interfere with the separator 13 before the first electrode 11 or the second electrode 12 is stacked after the stack table 2 is displaced to the first relative position or the second relative position, i.e. before the stack table 2 is displaced to the second relative position or the first relative position after the first electrode 11 or the second electrode 12 is stacked between the second step S2 and the fifth step S5. That is, the tension compensator 51 may be positioned to interfere with the separator 13 again between the second step S2 and the fourth step S4 and between the fifth step S5 and the first step S1.

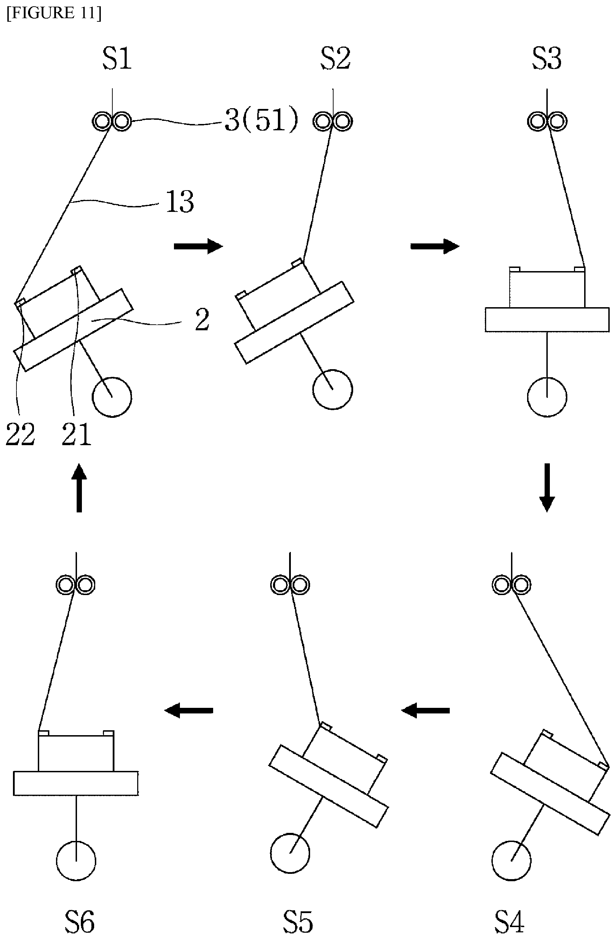

FIG. 11 illustrates a stacking process of an electrode according to a second modified example. Referring to FIG. 11, the tension compensator according to the second modified example may be included in the nip roller 3 or may be the nip roller 3 itself. That is, according to the embodiment of the present invention, the effect of preventing the widthwise center and the two widthwise ends of the separator 13 from being subjected to non-uniform tensile deformation by applying compensatory tension to the widthwise center of the separator 13 may be obtained not only when the tension compensator is provided separately, but also when the shape or dimension of the nip roller 3 is changed.

Specifically, among the pair of nip rollers 3, the left nip roller may apply pressure to the separator 13 over the sixth step S6, the first step S1 and the second step S2. Here, the surface that the first tension compensator 51 presses may be the first surface 131 of the separator 13.

Similarly, among the pair of nip rollers 3, the right nip roller may apply pressure to the separator 13 over the third step S3 to the fifth step S5. Here, the surface applied by the second tension compensator 52 may be the second surface 132 of the separator 13.

### [SHAPE OF TENSION COMPENSATOR]

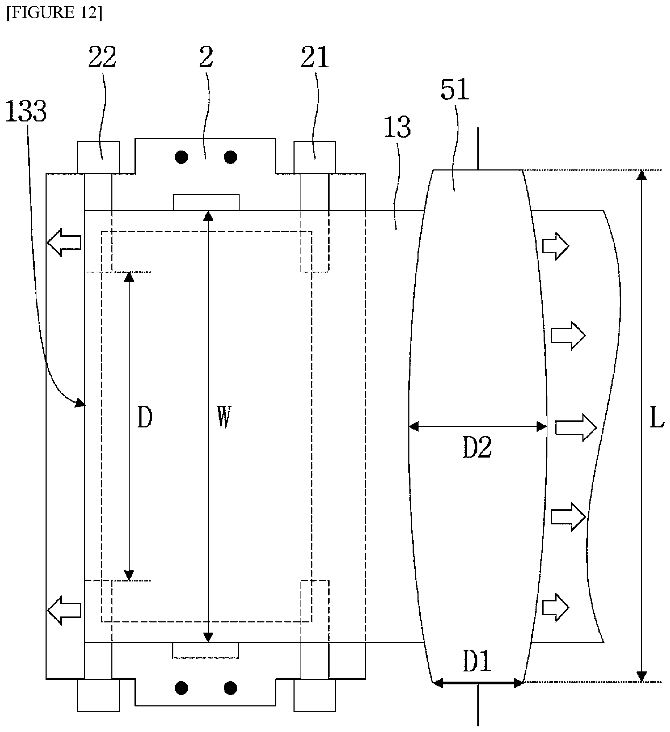

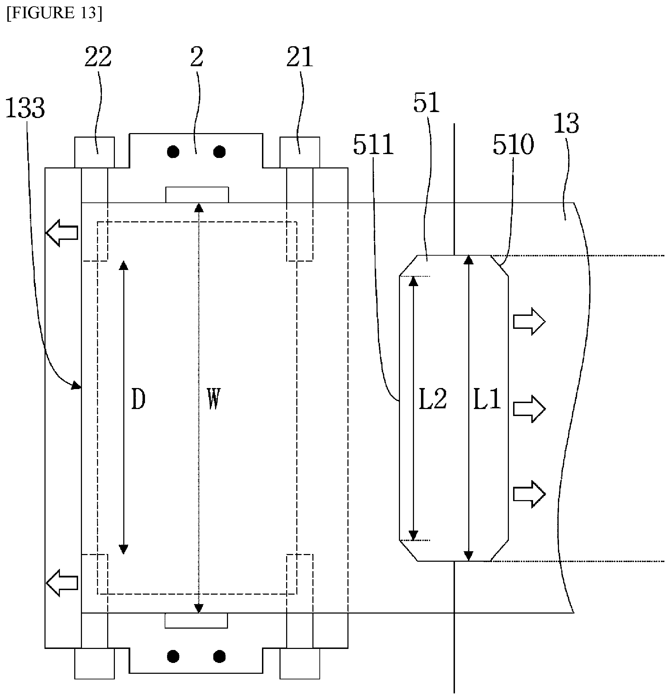

The tension compensator according to the present invention may have a dimension or shape suitable for applying a tension to the separator compensatory for the tensile force applied by the first mandrel and the second mandrel. While the following FIGS. 12 and 13 both illustrate the first tension compensator placed in the first step, the solution to the problem related to the shape and dimensions of the tension compensator described below may be applied independent of the arrangement of the tension compensator described above, that is, to all of the above-described embodiment, first modified example and second modified example of the present invention. Hereinafter, referring to FIGS. 12 and 13, the shape of the tension compensator according to the present invention will be described.

FIG. 12 illustrates a shape of a tension compensator according to an embodiment of the present invention. Referring to FIG. 12, the tension compensator 51 according to an embodiment of the present invention may have an elongated shape having a predetermined length l in the front-rear direction along the front-rear direction, the center of which with respect to the front-rear direction protrudes further toward the separator 13 than the front and rear ends thereof. That is, the center of the tension compensator 51 with respect to the front-rear direction may come into contact with the separator 13 first before coming into contact with the front and rear ends thereof when the separator 13 approaches to come in contact with the tension compensator 51 Accordingly, the tension compensator 51 may apply a greater tension to the widthwise center than the two widthwise ends of the separator 13, and compensate for the non-uniform tension applied to the separator 13 by the first mandrel 21 and the second mandrel 22.

According to an embodiment of the present invention, the tension compensator 51 may include a roll shape having a concentric circular cross-section along the front-rear direction. It is preferable that the tension compensator 51 is installed to be rotatable along the progress of the separator 13. Here, the first diameter D1 at the front and rear ends of the tension compensator 51 may be smaller than the second diameter D2 at the center with respect to the front-rear direction. In such case, the tension compensator 51 may not cause unnecessary friction with the separator 13, and thus may not cause excessive deformation or damage to the separator 13. However, it is sufficient as long as the tension compensator 51 extends along the front-rear direction and the center thereof with respect to the front-rear direction protrudes toward the separator 13 compared to the front and rear ends thereof, and it is not necessary that the tension compensator 51 is installed rotatably or have a roll shape.

According to an embodiment of the present invention, the diameter of the tension compensator 51 may increase from the front and rear ends thereof toward the center thereof with respect to the front-rear direction. Since the separator 13 is subjected to tensile deformation increasing from the widthwise center thereof toward the widthwise ends thereof due to the tension and friction force provided by the first mandrel 21 or the second mandrel 22, the tension compensator 51 may compensate for such deformation by having a shape corresponding thereto.

In addition, it is preferable that an increase rate of the diameter of the tension compensator 51 decreases from the front and rear ends thereof toward the center thereof with respect to the front-rear direction. Accordingly, the actual tensile deformation applied to the separator 13 may be accurately compensated, and the contact area between the tension compensator 51 and the separator 13 forms a smooth curve without a peak such that damage to the separator 13 may be prevented.

FIG. 13 illustrates a shape of a tension compensator according to another embodiment of the present invention. Referring to FIGS. 13, the tension compensator 51 may have an elongated shape having a predetermined first length L1 equal to or less than the predetermined width W in the front-rear direction. That is, the tension compensator 51 may be in contact with only a portion of, rather than the entirety of, the center of the separator 13 in the widthwise direction. Accordingly, the tension compensator 51 may apply a greater tension to the widthwise center than to the two widthwise ends of the separator 13, and may compensate for the non-uniform tension applied to the separator 13 by the first mandrel 21 and the second mandrel 22.

According to another embodiment of the present invention, the tension compensator 51 may include a roll shape having a concentric circular cross-section along the front-rear direction. It is preferable that the tension compensator 51 is installed to be rotatable along the progress of the separator 13. Here, the diameter of the tension compensator 51 may be larger at the center thereof with respect to the front-rear direction than at the front and rear ends thereof. In such case, the tension compensator 51 may not cause unnecessary friction with the separator 13, and thus may not cause excessive deformation or damage to the separator 13. However, it is sufficient as long as the first length L is less than the width W of the separator 13, and it is not necessary that the tension compensator 51 is installed rotatably or have a roll shape.

The tension compensator 51 according to another embodiment of the present invention may include: a pair of tapered portions 510 having a diameter increasing toward the center thereof with respect to the front-rear direction; and a flat portion 511 extending by a predetermined second length L2 and connecting the pair of tapered portions 510 with a constant diameter. Accordingly, the pressure applied by the tension compensator 51 to the separator 13 is prevented from being concentrated at the end of the tension compensator 51, thereby preventing the separator 13 from being excessively deformed or damaged.

Here, it is preferable that the second length L2 is equal to or less than the predetermined distance D. In such case, the flat portion 511 applies tension to a portion of the separator 13 where the first mandrel 21 and the second mandrel 22 do not apply tension, and the tapered portion 510 may prevent overlapping of the degree of deformation at the boundary between the portion where the tension compensator 51 applies tension and the portion where the first mandrel 21 and the second mandrel 22 apply tension. In addition, since tensile deformation may occur in a portion located inner than the portion of the separator 13 in contact with the first mandrel 21 in the widthwise direction due to the friction force between the first mandrel 21 and the second mandrel 22, it is preferable that the second length L2 be set to be sufficiently less than the predetermined distance D.

According to another embodiment of the present invention, the first length L1 may be larger than the predetermined distance D and less than the predetermined width W.

According to another embodiment of the present invention, the first length L1 may be larger than the predetermined distance D and less than the predetermined width. In such case, the tension compensator 51 may not apply tension to a portion where the first mandrel 21 or the second mandrel 22 applies tension.

It should be understood that the described embodiments are illustrative in all respects and not restrictive, and the scope of the present invention will be indicated by the following claims rather than the described detailed description. And the meaning and scope of the claims to be described later, as well as all changes and modifications derived from the equivalent concept should be interpreted as being included in the scope of the present invention.

Although the present invention has been described with reference to the exemplified drawings, it is to be understood that the present invention is not limited to the embodiments and drawings disclosed in this specification, and those skilled in the art will appreciate that various modifications are possible without departing from the scope and idea of the present invention. Further, although the operating effects according to the configuration of the present invention are not explicitly described while describing an embodiment of the present invention, it should be appreciated that predictable effects are also to be recognized by the configuration.

## Claims

1. An electrode stacking apparatus comprising:
a stack table provided with a first electrode and a second electrode alternately stacked with a separator having a predetermined width, wherein the separator is continuously provided in front-rear direction and folded in a zigzag manner such that first and second surfaces thereof are alternately exposed;
a pair of nip rollers arranged symmetrically on left and right sides of a predetermined plane of symmetry, respectively, wherein the pair of nip rollers is vertically spaced apart from the stack table to regulate a supply position of the separator supplied to the stack table;
a driving unit displacing a position of the stack table relative to the pair of nip roller between a first relative position on the left side and a second relative position on the right side of the plane of symmetry;
a pair of first mandrels spaced apart from each other along the front-rear direction with a predetermined distance therebetween and defining a right folded portion of the separator, wherein the pair of first mandrels presses the first surface of the separator against the stack table at least when the stack table is displaced from the first relative position to the second relative position;
a pair of second mandrels spaced apart from each other along the front-rear direction with the predetermined distance therebetween and defining a left folded portion of the separator, wherein the pair of second mandrels presses the second surface of the separator against the stack table at least when the stack table is displaced from the second relative position to the first relative position; and
a tension compensator of an elongated shape having a predetermined length in the front-rear direction so as to press a surface of the separator at least temporarily, the tension compensator having a center with respect to the front-rear direction protruding further toward the separator than front and rear ends thereof.

2. The electrode stacking apparatus of claim 1, wherein the tension compensator comprises:
a first tension compensator disposed on the left side with respect to the plane of symmetry and pressing the first surface of the separator at least in a portion of a section where the stack table is displaced from the second relative position to the first relative position; and
a second tension compensator disposed on the right side with respect to the plane of symmetry and pressing the second surface of the separator at least in a portion of a section where the stack table is displaced from the first relative position to the second relative position.

3. The electrode stacking apparatus of claim 1, wherein the tension compensator: is displaced in association with the stack table; presses the second surface of the separator at least in a portion of a section where the stack table is displaced from the first relative position to the second relative position; and presses the first surface of the separator at least in a portion of a section where the stack table is displaced from the second relative position to the first relative position.

4. The electrode stacking apparatus of claim 1, wherein the tension compensator comprises a roll shape having a concentric circular cross-section along the front-rear direction, and
a diameter of the tension compensator is larger at the center thereof with respect to the front-rear direction than at the front and rear ends thereof,.

5. The electrode stacking apparatus of claim 4, wherein the diameter of the tension compensator increases from the front and rear ends thereof toward the center thereof with respect to the front-rear direction.

6. The electrode stacking apparatus of claim 5, wherein an increase rate of the diameter of the tension compensator decreases from the front and rear ends thereof toward the center thereof with respect to the front-rear direction.

7. The electrode stacking apparatus of claim 4, wherein the tension compensator comprises a tapered portion having a diameter increasing toward the center thereof with respect to the front-rear direction.

8. The electrode stacking apparatus of claim 1, wherein the predetermined length is equal to or less than the predetermined width.

9. The electrode stacking apparatus of claim 8, wherein the predetermined length is equal to or less than the predetermined distance.

10. An electrode stacking apparatus comprising:
a stack table provided with a first electrode and a second electrode alternately stacked with a separator having a predetermined width, wherein the separator is continuously provided in front-rear direction and folded in a zigzag manner such that first and second surfaces thereof are alternately exposed;
a pair of nip rollers arranged symmetrically on left and right sides of a predetermined plane of symmetry, respectively, wherein the pair of nip rollers is vertically spaced apart from the stack table to regulate a supply position of the separator supplied to the stack table;
a driving unit displacing a position of the stack table relative to the pair of nip roller between a first relative position on the left side and a second relative position on the right side of the plane of symmetry;
a pair of first mandrels spaced apart from each other along the front-rear direction with a predetermined distance therebetween and defining a right folded portion of the separator, wherein the pair of first mandrels presses the first surface of the separator against the stack table at least when the stack table is displaced from the first relative position to the second relative position;
a pair of second mandrels spaced apart from each other along the front-rear direction with the predetermined distance therebetween and defining a left folded portion of the separator, wherein the pair of second mandrels presses the second surface of the separator against the stack table at least when the stack table is displaced from the second relative position to the first relative position; and
a tension compensator of an elongated shape having a predetermined first length equal to or less than the predetermined width in the front-rear direction so as to press a surface of the separator at least temporarily.

11. The electrode stacking apparatus of claim 10, wherein the tension compensator comprises:
a first tension compensator disposed on the left side with respect to the plane of symmetry and pressing the first surface of the separator at least in a portion of a section where the stack table is displaced from the second relative position to the first relative position; and
a second tension compensator disposed on the right side with respect to the plane of symmetry and pressing the second surface of the separator at least in a portion of a section where the stack table is displaced from the first relative position to the second relative position.

12. The electrode stacking apparatus of claim 10, wherein the tension compensator: is displaced in association with the stack table; presses the second surface of the separator at least in a portion of a section where the stack table is displaced from the first relative position to the second relative position; and presses the first surface of the separator at least in a portion of a section where the stack table is displaced from the second relative position to the first relative position.

13. The electrode stacking apparatus of claim 10, wherein the tension compensator comprises a roll shape having a circular cross-section along the front-rear direction, and
a diameter of the tension compensator is larger at the center thereof with respect to the front-rear direction than at the front and rear ends thereof.

14. The electrode stacking apparatus of claim 13, wherein the tension compensator comprises:
a pair of tapered portions having a diameter increasing toward the center thereof with respect to the front-rear direction; and
a flat portion extending by a predetermined second length and connecting the pair of tapered portions with a constant diameter.

15. The electrode stacking apparatus of claim 14, wherein the predetermined length is equal to or less than the predetermined width.

16. The electrode stacking apparatus of claim 10, wherein the predetermined length is equal to or less than the predetermined distance.

17. An electrode stacking apparatus comprising:
a stack table provided with a first electrode and a second electrode alternately stacked with a separator having a predetermined width, wherein the separator is continuously provided in front-rear direction and folded in a zigzag manner such that first and second surfaces thereof are alternately exposed;
a pair of nip rollers of an elongated shape having a predetermined length in the front-rear direction, wherein the pair of nip rollers are arranged symmetrically on left and right sides of a predetermined plane of symmetry, respectively and is vertically spaced apart from the stack table to regulate a supply position of the separator supplied to the stack table;
a driving unit displacing a position of the stack table relative to the pair of nip roller between a first relative position on the left side and a second relative position on the right side of the plane of symmetry;
a pair of first mandrels spaced apart from each other along the front-rear direction with a predetermined distance therebetween and defining a right folded portion of the separator, wherein the pair of first mandrels presses the first surface of the separator against the stack table at least when the stack table is displaced from the first relative position to the second relative position; and
a pair of second mandrels spaced apart from each other along the front-rear direction with the predetermined distance therebetween and defining a left folded portion of the separator, wherein the pair of second mandrels presses the second surface of the separator against the stack table at least when the stack table is displaced from the second relative position to the first relative position,
wherein each of the nip rollers has a diameter larger at a portion corresponding to the widthwise center of the separator than at a portion corresponding to two widthwise ends of the separator.
